# EUROPÄISCHE PATENTANMELDUNG

(11) **EP 0 618 459 A2**
(43) Veröffentlichungstag der Anmeldung: **05.10.1994**
(21) Anmeldenummer: 94103070.2
(22) Anmeldetag: 01.03.1994
(51) Int. Cl.: G01S 13/02, B61L 3/00, B61L 25/02, G06K 7/10, G01V 15/00

(54) **System zur Zielbremsung von Fahrzeugen**

(30) Priorität: 31.03.1993 DE 4310610
(71) Anmelder: SIEMENS AKTIENGESELLSCHAFT, D-80333 München (DE)
(72) Erfinder: Magori, Valentin, Dipl.-Phys., D-81539 München (DE); Bulst, Wolf-Eckhart, Dipl.-Phys., D-81739 München (DE)

(57) **Zusammenfassung**

System zur Messung der Orts- und Geschwindigkeitsgrößen für Zielbremsung von insbesondere Schienenfahrzeugen.

## Beschreibung

Die vorliegende Erfindung bezieht sich auf ein System zur Zielbremsung von Fahrzeugen, wie insbesondere Zügen.

Insbesondere für den automatischen Betrieb von Fahrzeugen, wie insbesondere Eisenbahnzügen, ist es erwünscht oder sogar notwendig, daß diese in Bahnhöfen, an Verladestationen und dgl. auf einem genauen Punkt zum Halten kommen. Dabei soll dieses genaue Halten aus möglichst voller Fahrt erzielt werden, d.h. nicht nur durch langsames Heranschleichen an den Haltepunkt erreichbar seien. Zum Beispiel im Personennahverkehr ist solches zielgenaues Anhalten in Bahnstationen erwünscht und kann sogar zwingend notwendig sein, wo nur bei Halt des Zuges an einer ganz bestimmten Stelle in der Station die einzelnen Wagen betreten oder verlassen werden können, nämlich (wie zum Beispiel in St. Petersburg) wo kein eigentlicher Bahnsteig vorhanden ist, sondern der Gleistunnel des Zuges mit einem Tunnel für die wartenden Personen nur durch einzelne kleine Querverbindungstunnel verbunden ist, vor deren Ende im Gleistunnel sich jeweils eine Wagentür des angehaltenen Zuges befindet.

Bei einer solchen Zielbremsung ist es erforderlich, daß die Betriebsautomatik des einfahrenden Zuges in ausreichend engen Strecken - bzw. Zeitabständen mitgeteilt bekommt, an welchen Stellen sich der Zug im Augenblick befindet. Es können hierfür zum Beispiel Lichtschranken verwendet werden, bei deren Durchfahren die Betriebsautomatik des Zuges ein Signal bekommt. In dem rauhen Bahnbetrieb, aber auch beim Betrieb von Autobussen und dergleichen, ist es erforderlich, daß die Signalmittel außerordentliche Robustheit, Dauerhaftigkeit und Unempfindlichkeit gegen Verschmutzung haben, denn die Betriebssicherheit hängt entscheidend von der Wirksamkeit solcher Wegmarkierungen ab und deren Versagen könnte zu gefährlichen Situationen,wenn nicht großen Unfällen führen.

Es ist somit Aufgabe der vorliegenden Erfindung, Maßnahmen anzugeben, mit denen eine sichere und einfach auswertbare Wegemarkierung erzielbar ist.

Die obengenannte Aufgabe wird mit den Merkmalen des Patentanspruches 1 gelöst und weitere Ausgestaltungen der Erfindung gehen aus den Unteransprüchen hervor.

Die Idee der Erfindung geht davon aus, daß Identifizierungsmarken, sog. ID-Tags, die gestellten Anforderungen ohne weiteres erfüllen. Diese bereits in einem System der Firma Siemens in Oslo verwendeten Identifizierungsmarken zur Gebührenerfassung an Mautstellen des Autobahnsystems sind geeignet, berührungslos über eine Entfernung von Metern exakt identifiziert zu werden. Es sind dies spezielle Oberflächenwellen-Bauelemente, sogenannte JD-Tags.

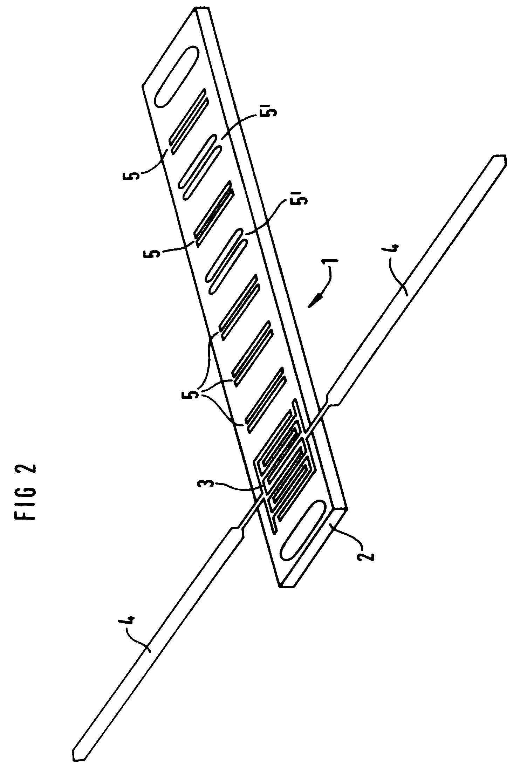

In Figur 2 ist mit 1 eine solche Identifizierungsmarke schematisch dargestellt. Auf der Oberfläche des mit 2 bezeichneten Substratkörpers aus vorzugsweise piezoelektrisch stark koppelndem Material wie Lithiumniobat, -tantalat und dergleichen, befindet sich eine photolithographisch aufgebrachte Streifenstruktur. Der mit 3 bezeichnete Anteil dieser Streifenstruktur ist der Indigitalwandler, an dessen elektrischen Anschlüssen die Dipole der Antenne 4 angeschlossen sind. Mit 5 ist die Streifenstruktur des Reflektors bezeichnet. Die nur mit Punktierung angedeutete, tatsächlich jedoch freien Plätze 5' weggelassener Reflektorstreifen, genauer deren Verteilung in der Reflektorstruktur 5, bilden die vorgebbare Kodierung. Eine solche Reflektorstruktur 5 hat in der Praxis mehrere 100 in periodischer Folge angeordnete Reflektorstreifen, woraus die große Anzahl der Kodierungsmöglichkeiten ersichtlich ist.

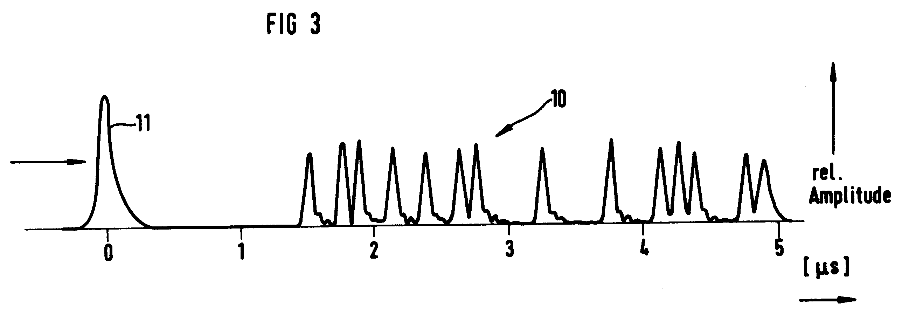

Figur 3 zeigt die in der Impulsantwort der Identifizierungsmarke 1 enthaltene Impulsfolge 10 (Hüllkurve), die die Antwort der Kodierung der Reflektorstruktur 5 auf einen empfangenen Burst 11 ist.

In entsprechenden Abstanden voneinander werden gemäß einem Merkmal der Erfindung solche Identifizierungsmarken vor dem Haltepunkt für den Zug im Gleisbereich oder auch an der Tunnelwand installiert. Vorzugsweise hat eine jede Identifizierungsmarke eines solchen Brems-Streckenabschnittes eine eigene Kodierung, d.h. ist mit den anderen Identifizierungsmarken dieses Abschnittes unverwechselbar. Der z.B. in die Station einfahrende Zug überfährt diese oder fährt entlang an dieser Folge der Identifizierungsmarken. Das automatische Steuersystem des Zuges weiß bei der Vorbeifahrt an einer jeden der Indentifizierungsmarken, wo genau sich der Zug augenblicklich befindet bzw. welche genau lokalisierte Stelle im Augenblick erreicht ist.

Aus den Betriebsdaten des Zuges kann ein Programm im voraus errechnet bzw. ermittelt werden, nach dem der Zug beim Einfahren z.B. in die Station von einer zur anderen Identifizierungsmarke mehr oder weniger stark verzögert wird. Das Programm ist so gewählt, daß der einfahrende Zug aus voller Geschwindigkeit mit jeweils vorgegebener, insbesondere höchstmöglicher Verzögerung fortlaufend abgebremst werden kann, ohne daß auch nur in irgendeinem Augenblick der Reifen des Eisenbahnrades auf der Schiene zum Rutschen kommt, d.h. gleitende Reibung auftritt. Letzteres würde nicht nur die Reifenflächen erheblich mehr abnutzen, sondern wegen der Undefiniertheit der gleitenden Reibung käme der Zug an ganz anderer als der vorgegebenen Stelle zum Stillstand.

Es ist jedoch zu berücksichtigen, daß die jeweils maximal erreichbare rollende Reibung des Eisenbahnrades auf der Schiene unterschiedlich groß sein kann, so daß nicht davon ausgegangen werden kann in jedem Falle das Optimum an kurzer Bremsstrecke zu erreichen. In dem Programm für das Bremsen ist diese Unbestimmtheit in der Weise zu berücksichtigen, daß von einer zu erwartenden größeren Bremsstrecke ausgegangen wird und zum Beispiel mit dem Bremsen in einem ersten Abschnitt der gesamten Verzögerungsstrecke festgestellt wird, wie hoch in etwa das Maximum des Koeffizienten der rollenden Reibung augenblicklich ist und für den Rest der Bremsstecke zu erwarten ist. Das Bremsen kann dann zum Beispiel mit einem dementsprechend modifzierten Programm automatisiert erfolgen. Noch günstiger ist es nach den Regeln der Fuzzy-Logic die hierfür üblichen Vorausabschätzungen aus augenblicklich schon gemessenen Werten zu treffen und ein wenn schon nicht das optimale Programm so doch ein optimal angenähertes Optimum des Bremsens zu erzielen.

Mit Hilfe der schon erwähnten Identifizierungsmarken im Gleis- bzw. Tunnelbereich nahe dem vorbeifahrenden Zug und aufgrund der Kodierung dieser Identifizierungsmarken kann vom fahrenden Zug aus jede einzelne Identifizierungsmarke eindeutig erkannt werden und es ist damit die augenblickliche Position des fahrenden Zuges bekannt.

Mit Hilfe der Identifizierungsmarken kann aber darüber hinaus auch noch die Geschwindigkeit des Zuges über Grund mit hoher Genauigkeit exakt bestimmt werden, nämlich frei von jeglichen durch Schlupf bedingten Ungenauigkeiten, die bei Messen der Fahrgeschwindigkeit aus der Umdrehungsgeschwindigkeit des rollenden Rades unvermeidlich sind. Vielmehr kann mit der mit Hilfe der Identifizierungsmarken exakt ermittelten Geschwindigkeit augenblicklich festgestellt werden, ob derzeit Schlupf des rollenden Rades vorliegt. Es braucht nur die mit dem rollenden Rad ermittelte Geschwindigkeit mit dem exakt gemessenen Wert verglichen werden und die Differenz ergibt sich als Schlupf.

Die vorliegende Erfindung läßt sich nicht nur im Eisenbahnbetrieb anwenden, sondern kann auch in vergleichbar gelagerten Fällen bei anderen Verkehrsmitteln zur Anwendung kommen. Insofern läßt sich die nachfolgend gegebene Beschreibung zur Ausführung der Erfindung dann ohne weiteres auch auf solche vergleichbaren Fälle übertragen.

Das erfindungsgemäß angewendete Auswerteverfahren sieht vor, von einem Impulssender Burst-Impulse 11 entsprechend hoher Trägerfrequenz auszusenden. Über die Antenne 4 der Identifizierungsmarke 1 wird dieser Burst-Impuls von der Oberflächenwellenstruktur 3, 5 der Identifizierungsmarke 1 aufgenommen und von dieser in ein charakteristisches Impulsantwortsignal 10 umgewandelt. Die Charakteristik des Impulsantwortsignals hängt von der gewählten Struktur des Reflektors 5 der Identifizierungsmarke ab. Das von der Identifizierungsmarke an das Auswertegerät zurückgesandte Impulsantwortsignal enthält außer der Kodierung des Reflektors noch weitere Informationen. Da das an dem fahrenden Zug angebrachte Impulssende- und Impulsantwort-Auswertegerät sich der Identifizierungsmarke mit der Geschwindigkeit des Zuges nähert tritt eine Dopplerfrequenzverschiebung der Trägerfrequenz des Impulsantwortsignals auf (aus der die Relativgeschwindigkeit zwischen Zug und Identifizierungsmarke zu ermitteln ist). Mit den konstruktiv bedingt bekannten Lagepositionen der Identifizierungsmarke im Gleisbereich oder an der Tunnelwand einerseits und des Anbringungsortes des Sende-/Auswertegerätes am Zug andererseits läßt sich die Absolutgeschwindigkeit des Zuges ohne weiteres aus der gemessenen Relativgeschwindigkeit errechnen, und zwar ohne jeden Schlupf-Fehler.

Wann genau der Zug die jeweilige Identifizierungsmarke als Wegmarke überfährt, ist aus dem Verlauf der gemessenen Dopplerfrequenzverschiebung festzustellen. Der Nulldurchgang der Dopplerfrequenzverschiebung ist der Ort der Wegmarke.

Die Dopplerverschiebung kann als Frequenzverschiebung oder (bei entsprechend kleinen Werten) als Phasenverschiebung gegenüber einer Bezugsphase ermittelt und ausgewertet werden.

Die Erfindung betrifft also die Maßnahmen, den Verlauf der Relativgeschwindigkeit zwischen der Identifizierungs-/Wegmarke und der Sende-/Empfangsantenne des Sende-/Auswertegerätes aus der Doppler-Frequenz/-Phasenverschiebung der Trägerfrequenz des Impulsantwortsignals oder eines Teils davon zu errechnen und damit sowohl die wahre Geschwindigkeit als auch die genaue Position des Zuges (oder sonstigen Fahrzeuges) zu bestimmen. Die Übereinstimmung der Position des Zuges mit der durch die Identifizierungsmarke gekennzeichneten Position wird mit Hilfe des Nulldurchgangs der Doppler-Frequenz/-Phasenverschiebung der Trägerfrequenz des Antwortsignals (oder eines Teiles davon) erfaßt. Der Abstand zwischen der mit dem Zug mechanisch gekoppelten Sende-/Empfangsantenne für das Impulsantwortsignal und der Identifizierungsmarke beim Überfahren derselben kann, wenn dieser Wert nicht ohnehin bekannt ist, ebenfalls aus der Doppler-Frequenz/-Phasenverschiebung errechnet werden. Ist dieser Abstandswert bekannt, kann durch eine wie voranstehend beschriebene Messung desselben aus der Übereinstimmung von Meßwert und bekanntem Wert die Zuverlässigkeit und Genauigkeit des erfindungsgemäßen Systems jederzeit überprüft werden. Die genaue Lage der Position der Identifizierungsmarke als Wegmarke relativ zum Zug wird aus dem Verhältnis zwischen der Geschwindigkeit des Zuges und seiner Relativgeschwindigkeit berechnet. Aus diesen beiden Geschwindigkeiten errechnet sich an jedem Ort der Bewegungsbahn die Richtung der jeweiligen Verbindungslinie zwischen der Identifizierungsmarke und der Sende-/Empfangsantenne des Auswertegerätes. Der Ort der Wegmarke ergibt sich als Schnittpunkt dieser Verbindungslinie von verschiedenen Positionen des Zuges, das heißt Positionen der Sende-/Empfangsantenne, aus. Insbesondere ergibt sich dieser Ort auch aus dem Schnittpunkt mindestens einer dieser Verbindungslinien mit dem oben beschriebenen Lot oder mit der parallel zur Fahrbahn verlaufenden Geraden, die den schon oben erwähnten Lotrechten Abstand zwischen Antenne und Marke beim Überfahren derselben hat. Umgekehrt kann der Abstand zwischen der Identifizierungsmarke als Schnittpunkt der obigen Verbindungslinien errechnet werden.

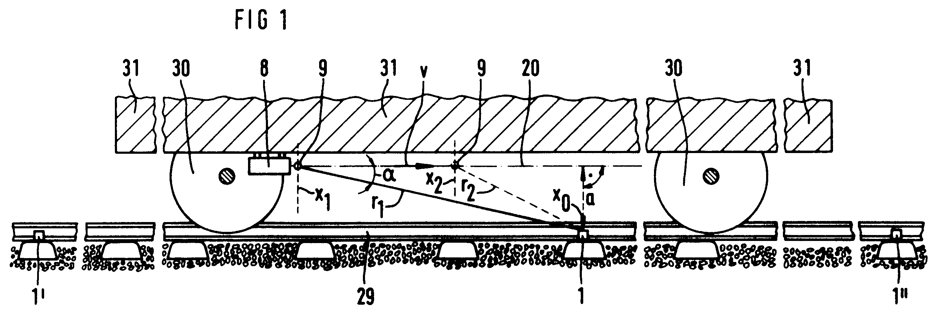

Zur Verdeutlichung dieser geometrischen Verhältnisse ist die geschnittene Ansicht der Figur 1 beigefügt. Diese Figur zeigt mit 1 bezeichnet die gerade abgefragte Identifizierungsmarke als Wegmarke im Gleisbereich. Die Schiene ist mit 29 und ein Wagenrad ist mit 30 bezeichnet. Weitere Identifizierungsmarken als Wegmarken sind mit 1', 1'' bezeichnet. Verwechslungen kann es nicht geben, da jede der Identifizierungsmarken ein eigenes kodiertes, das heißt unverwechselbares Impulsantwortsignal bei Abfragen abgibt.

Mit 9 ist die Sende-/Empfangsantenne des Auswertegerätes 8 bezeichnet. Entsprechend dem Fahrweg des Wagens 31 mit den Rädern 3 bewegt sich diese Antenne 9 auf der Bewegungsbahn 20 parallel zur Schiene 29. Der lotrechte Abstand, das heißt der Abstand zwischen Antenne 9 und Identifizierungsmarke 1 beim Überfahren desselben ist mit a bezeichnet. Wird im Augenblick der dargestellten Position der Antenne 9 gegenüber der Identifizierungsmarke 1 ein Abfrageimpuls ausgesandt, so tritt eine dem Verbindungsstrahl r₁ entsprechende Relativgeschwindigkeit V ᵣₑₗ als Dopplerverschiebungs-Geschwindigkeit auf. Dieser Geschwindigkeitswert wird zwischen wenigstens zwei kurzzeitig aufeinanderfolgend abgefragten und empfangenen Impulsantwortsignalen als Frequenz- oder Phasenverschiebung gemessen. Der Winkel α ist der Richtungswinkel der Verbindungslinie r₁. Wird diese am Ort x1 erfolgte am Ort x2 wiederholt, erhält man die Relativgeschwindigkeit Vᵣₑₗ₂ für die Verbindungslinie r₂. Es ergibt sich dabei eine entsprechend verringerte Relativgeschwindigkeit. Im Punkt x0 ist die Relativgeschwindigkeit Null. Dieser Effekt wird zur Bestimmung des Ortes Xo und Zeitpunktes des des Überfahrens der Identifizierungsmarke 1 genutzt werden.

Die Kodierung der als Wegmarkenverwendeten Identifizierungsmarke enthält die jeweils zugeordnete Positionsnummer in der Folge einer Mehrzahl im Abstand voneinander angeordneten Wegmarken. Vorzugsweise ist eine solche Folge von Wegmarken im Bremsbereich vor einer Station vorgesehen. Solche Wegmarken können aber auch sonstwo auf der Strecke vorgesehen sein, zum Beispiel um allein die Geschwindigkeit des Zuges schlupffrei zu messen. Wie erwähnt sind die als Wegemarke verwendeten Identifizierungsmarken mit Oberflächenwellenstrukturen passive Bauelemente, die keinerlei Stromversorgung bedürfen. Lediglich ihr Wirkungsbereich ist relativ begrenzt, was im vorliegenden Falle aber ein Vorteil ist, nämlich daß Störungseinflüsse aus der Umgebung praktisch ausgeschlossen sind.

## Patentansprüche

1. System mit Bestimmung des momentanen Orts (Xo) und der momentanen Geschwindigkeit (v) eines insbesondere schienengebundenen Fahrzeugs,
bei dem am Fahrzeug (31) ein Sende-/Auswertegerät (8) mit Antenne (9) zum Aussenden eines Hochfrequenzimpulses (Burst) (11) und zum Empfangen eines reflektierten Impulsantwortsignals (10) angeordnet ist;
bei dem im Bereich und entlang des vorgegebenen Fahrweges (29) in Abständen voneinander als Wegemarken Oberflächenwellen-Identifizierungsmarken (1, 1', 1'') mit individueller Kodierung (5') angeordnet sind,
wobei mit an einem Ort (x1) vor/nach Überfahren einer bestimmten Identifizierungsmarke (1) wenigstens zweimal aufeinanderfolgendem Impulsabfragen (11) dieser Identifizierungsmarke (1) die gegenseitige Phasenverschiebung der zu erhaltenden wenigstens zwei Impulsantwortsignale (10) als Dopplerverschiebung zu messen und daraus über die Relativgeschwindigkeit (vᵣₑₗ) die Fahrzeuggeschwindigkeit (v) zu ermitteln ist, und
wobei der Zeitpunkt des Vorzeichenwechsels der Dopplerverschiebung für diese Identifizierungsmarke zu erfassen ist, der der Zeitpunkt des Überfahrens des vorgegebenen Orts (Xo) der Identifizierungsmarke ist.

2. System nach Anspruch 1,
bei dem aus der bekannten Höhe (a) der Bewegungsbahn (20) der Antenne (9) des Sende-/Auswertegerätes (8), der am Ort x1 gemessenen Relativgeschwindigkeit (vᵣₑₗ) und der Zeitdauer des Durchfahrens der Strecke |X₁ - Xₒ| zwischen den Orten X1 und Xo die genaue Bahngeschwindigkeit (v) errechnet wird.

3. Anwendung eines Systems nach Anspruch 1 oder 2 zur Ermittlung der Orts- und Geschwindigkeitswerte (Xo, v) für Zielbremsung des Fahrzeugs (31).
